**Europäisches Patentamt**

**European Patent Office**

**Office européen des brevets**

(19)

(11) **EP 1 263 219 A2**

(12) **EUROPEAN PATENT APPLICATION**

(43) Date of publication:
**04.12.2002 Bulletin 2002/49**

(51) Int Cl.⁷: **H04N 5/445**

(21) Application number: **01308067.6**

(22) Date of filing: **21.09.2001**

| | |
|---|---|
| (84) Designated Contracting States: **AT BE CH CY DE DK ES FI FR GB GR IE IT LI LU MC NL PT SE TR** Designated Extension States: **AL LT LV MK RO SI** | (72) Inventor: **Cormie, Steven Cambridge CB3 8ER (GB)** |
| (30) Priority: **21.09.2000 GB 0023145** | (74) Representative: **Wood, Graham Bailey Walsh & Co, 5 York Place Leeds LS1 2SD (GB)** |
| (71) Applicant: **Pace Micro Technology PLC Saltaire, Shipley, BD18 3LF (GB)** | |

(54) **Generation of Text on a Display Screen**

(57)     The invention to which this application relates is to the generation of a font or text on a display screen such as, for example, a display screen of a television set. The present invention provides a means whereby a broadcast data receiver can be used to generate font or text on a "transparent" video background so that a video image on the screen is still viewable which moves yet still reduce the visible flicker of the font or text with respect to the video image. By following the present invention, there is provided a means whereby flickering text which conventionally occurs on transparent backgrounds can be eliminated or at least reduced.

## Description

The invention to which this application relates is to the generation of a font or text on a display screen such as, for example, a display screen of a television set.

The generation of text on a television screen typically comprises a number of letters or fonts which are generated on a coloured background or, on a "transparent" background. The use of the term "transparent" means that the text or fonts themselves are not provided on a coloured or visible background attributable to a display, but instead are superimposed on a moving video image which is already being displayed on the screen, typically the television programme.

When text or font is generated on a background colour, e.g. black font on a white background, a process called anti-aliasing is followed which allows the blending at the edge of the text, between the colour of the font and the colour of background such that, for example, when black font is generated on a white background, shades of grey are generated in the area around the text and the generation of these shades of grey is called anti-aliasing. The need for this is to prevent the appearance of the text or font flickering when it is generated on the screen and the anti-aliasing serves to merge the font with the background and hence prevent the flickering from being visually apparent.

However, when font is generated on a transparent background with no particular colour, this means that anti-aliasing cannot be applied because there is no uniform or constant background colour against which the font or text is anti-aliased. This can result in text that "flickers" and can be visually seen around the edges of the text. The same is especially prevalent when the video image over which the text is superimposed changes and particularly where there is a greater contrast between the colour of the video image and the colour of the font.

The invention is particularly related to and to be implemented in a broadcast data receiver (BDR) which is the apparatus used to receive and process data broadcast from a remote location. The BDR can be connected to the television set or may be provided as an integral part of the same. Many BDR's which are currently produced, have the ability to generate anti-alias text on coloured backgrounds and this has the benefits discussed above when the text is displayed on the same as the flicker is reduced. However the BDR's do not have the ability to clearly generate text on the moving video image.

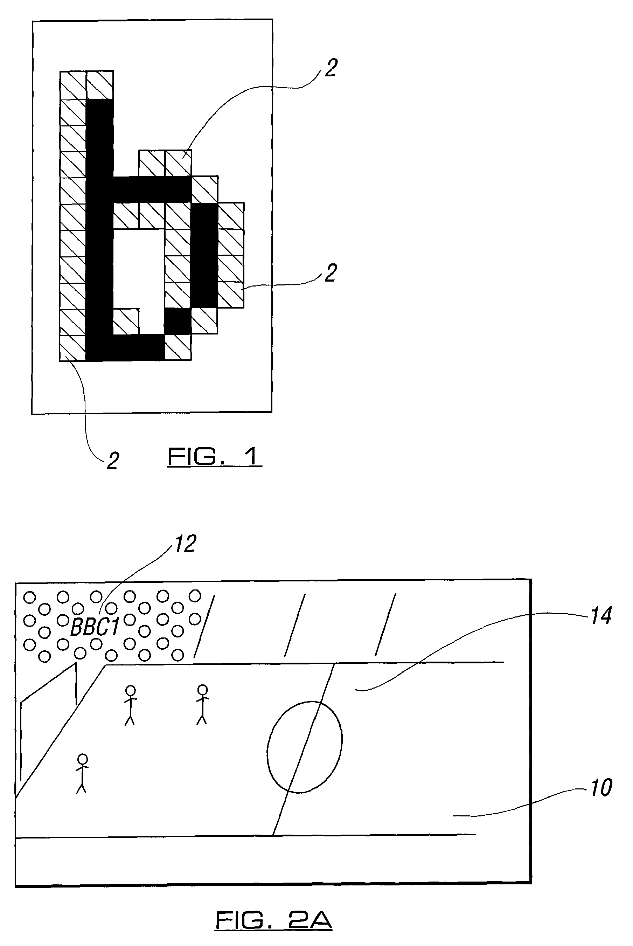

An example of the use of the conventional generation of text on a solid colour background using anti-aliasing is provided with reference to Figure 1 wherein the text letter "b" has been rendered in black on a white background and the anti-aliasing process has blended the letter "b" at the edges using portions of shades of grey indicated by the numeral 2. The same process can be followed when using different colours of text against another colour of background and then interpolating between the two colours, to arrive at the anti-aliasing colour and shades to be used. However this system requires the uniform background colour to be provided around the text which can obliterate part of the screen which otherwise would be desired to be viewable.

The applicant is already aware of some prior art which is briefly discussed herein.

EP1077445A discloses a method for anti-aliasing text as described above. The current application is related to the provision of text on a "transparent" background.

WO 200052673 and US5910805 discloses a method for anti-aliasing text on a coloured background. The current application relates to the provision of text drawn over a transparent background clearly with no flicker.

EP403126 is related to a method for anti-aliasing text and an extension to derive a different anti-aliased font face from the original font. The current application relates to the provision of the text on a transparent background.

US5940080 relates to the provision of a background pixel colour. The patent does not relate to an independently changing video background which is addressed in the current application.

EP676723 and WO9114995 relate to anti-aliasing of computer graphics rather than text on a display screen such as that of the television screen of the current application.

The aim of the present invention is to provide a means whereby a broadcast data receiver can be used to generate font or text on a "transparent" background and still be used to reduce the visible flicker of the text with respect to the video image onto which the text is superimposed.

In a first aspect of the invention there is provided a display system comprising a display screen, and a receiving means connected with the said display screen for generating video images to be displayed on said screen, said receiving means also being provided with means to generate text which is selectively superimposed on said video image on the screen and characterised in that in the generation of said text, the pixels of the video image which are adjacent to said text on screen, are altered for display to include at least an element of the colour in which the text is generated.

Typically, if the pixels which are adjusted are those directly adjacent to the text in question, then the colour of the pixel will be changed to or be close to the colour of the text.

If the pixels which are altered are adjacent to but spaced from the text, then the same may be altered to include an element of the colour of the text but not to such a great extent as those pixels which are closer to the text.

The purpose of the alteration to the pixels surrounding and adjacent to the text is to allow the text to blend with the video image over which the text is superimposed to prevent the flickering effect of the text.

In one embodiment, the text is provided on a "transparent" background which means that the video image on the screen is viewable in a normal, moving and changing, format with the exception of the specific area covered by the text. In this case, alteration of the adjacent pixels as described, is followed, and repeated as the video image pixels on screen change.

In an alternative embodiment, the text is displayed on a background layer of a uniform colour and said background of uniform colour can be extended over a specific area of the screen or over the entire screen; however the video image is at least partially viewable by the viewer through the background layer. In this format, the pixels which are adjacent to the text include an element of the colour of the video image and also an additional element whereby the transparency of the pixels surrounding the text is adjusted with respect to the level of transparency of the background layer.

Typically, the adjustment of the pixels adjacent the text displayed on the screen is an ongoing process with the pixels colour changing as the video image on the screen changes for the duration of the display of the text. In one embodiment, while the colour of the pixels change during the display of the text, the percentage of the colour of the text allocated to each pixel remains constant during the display of the text, and the change in colour of the pixel is due to change in colour of the video image.

In a further aspect of the invention there is provided a method for generating a text display on a display screen, said text superimposed directly onto a moving video image or indirectly onto a semi transparent background, said method comprising the steps of specifying the colour of the text, performing an anti aliasing technique on the edge of the text and characterised in that for those pixels of the display adjacent the displayed text at least some of said pixels are adjusted in that a percentage of the colour of the text is combined with the required colour of the pixel derived from the video image and said adjusted pixels displayed.

In one embodiment those pixels directly adjacent to the displayed text include a larger proportion of the colour of the text.

Typically, if the text is displayed on a semi transparent background, the pixels are further adjusted by a factor representing the degree of transparency of the background layer.

In whichever embodiment it is preferred that the adjustments to the pixels change as the video image changes for those pixels such that the colour of the displayed pixels changes in accordance with changes to the video image colours.

In a yet further aspect of the invention there is provided a broadcast data receiver for the generation of video images on a display screen of a television set, said receiver also capable of generating text superimposed over the said video image and characterised in that when generating the text the pixels of the video image which are adjacent to said text on screen are altered for display to include at least an element of the colour in which the text is generated.

Specific embodiments of the invention are now described with reference to the accompanying drawings, wherein:-

Figure 1 illustrates an example of prior art where text has been adjusted in accordance with conventional technology and there is shown a black letter against a solid white background with the moving video on screen obliterated over that portion of the display;

Figure 2a illustrates the display of text in accordance with the invention superimposed over a moving video image;

Figures 2b and 2c illustrates the text of Figure 2a in more detail; and

Figure 3 illustrates a further embodiment of the invention.

The invention of this application relates to improvement to the process that is conventionally used to anti-alias text which is rendered on a solid colour graphics display. There are several different ways known of calculating the anti-alias however the fundamentals of the anti alias text rendering process are typically the same. In the process, the extent of the area of each single pixel which would be covered by foreground colour of the text and how much of the pixel area would be covered by the background colour, if the outline or edge of the text character that passes through the pixel were drawn through the pixel precisely, is determined.

The present invention provides an improvement to the anti alias text rendering by providing what is referred to as an anti alias alpha blend process. For the purposes of describing the anti-alias alpha-blend process of the invention it is assumed that the anti alias procedure of the preceding paragraph has already been performed and the text or foreground covers **P** percent of the pixel area, where **P** will vary depending on how much of the character outline covers the pixel.

In practice, the anti-alias colour of the pixel will lie somewhere in the region between the background colour and the foreground colour. In accordance with the invention, the anti-alias colour is determined by interpolating between the background and foreground colours by **P** percent. Thus, with the background colour expressed as components of red, green and blue as **(Rb, Gb, Bb)** and the foreground colour of the font as **(Rf, Gf, Bf)** then the anti-alias colour **(Ra, Ga, Ba)** is calculated as follows:

$$Ra = Rb + P * (Rf - Rb) / 100;$$

$$Ga = Gb + P * (Gf - Gb) / 100;$$

$$Ba = Bb + P * (Bf - Bb) / 100;$$

Although the alpha level (transparency) of a pixel is often held separate from the colour information it can be considered as a fourth component of the pixel "colour" e.g. **(Rb, Gb, Bb, Tb), (Rf, Gf, Bf, Tf)** and **(Ra, Ga, Ba, Ta).** In a similar way to the colour components the alpha level of the anti-alias alpha-blended pixel is calculated as follows:

$$Ta = Tb + P * (Tf - Tb) / 100;$$

There are two exceptions to the above calculations. The first occurs when the alpha level of the background, **Tb**, equals 0 i.e. the background is completely transparent and the video image is viewable to form the background. In this case none of the unseen background pixel colour should be used otherwise a fringing effect will be seen around the character where elements of the background colour (which can't be seen) are pulled into the anti-alias alpha-blended pixel.

For example, if the background is white but also completely transparent and the font colour is black then the anti-alias alpha-blended pixel would be a semi-transparent grey whereas it should be a semitransparent black. In this case, the following calculations are used:

if (Tb == 0)

$$\{Ra = Rf;$$

$$Ga = Gf;$$

$$Ba = Bf;$$

$$Ta = P * Tf / 100;\}$$

Similarly, if the alpha level of the foreground text colour, **Tf**, equals 0 i.e. the text is completely transparent, then the foreground colour (which will not be seen) must be prevented from tainting the colour of the background pixel or again, fringing will occur. In this case, the following calculations are used:
**if (Tf == 0)**

$$\{Ra = Rb;$$

$$Ga = Gb;$$

$$Ba = Bb;$$

$$Ta = (100 - P) * Tb / 100;\}$$

It should be noted that all of the calculations of the invention described above are done on individual pixels round the edges of the rendered text characters and both the colour and alpha blending are performed on a per-pixel basis, as opposed to against a solid background colour as is conventionally the case. For example, in accordance with the invention, text can be rendered anti-alias and alpha-blended against a background that varies in both colour and level of transparency.

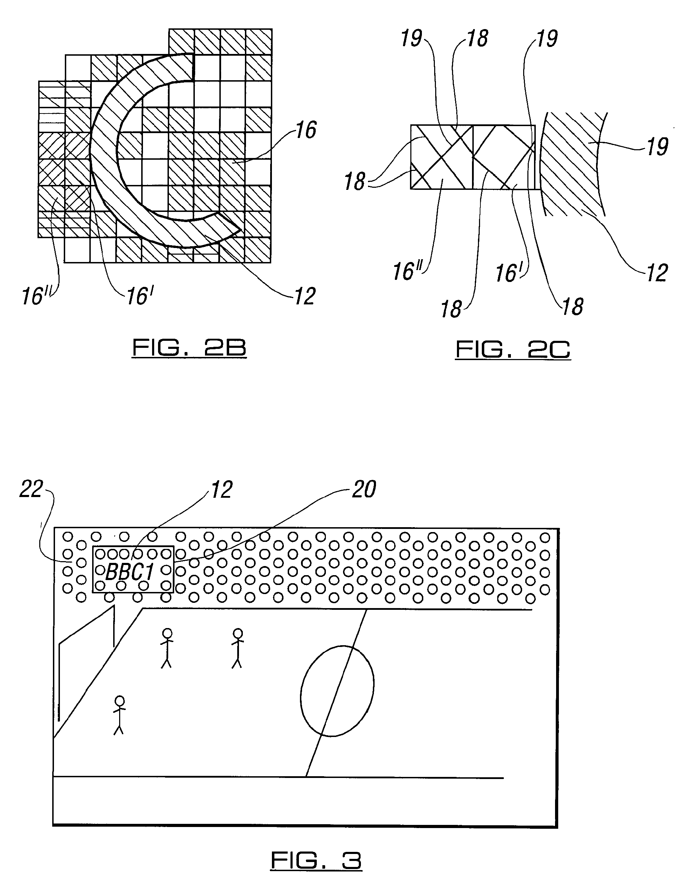

Referring now to the Figures, prior art Figure 1 has already been described in the preamble to this patent application and therefore we now describe the practical and illustrative examples of the invention with reference to Figures 2A, 2B and 2C in which there is illustrated a first embodiment of the invention and Figure 3 which illustrates a further embodiment of the invention.

In the embodiment of Figures 2A 2B, and 2C there is shown a display screen 10 which is being used to show a video image 14 which is a moving video image in the form of a television programme, in this case a sports programme. In many instances, perhaps to indicate a particular function of the apparatus or, to highlight a feature to a user or sports score or the like, text is required to be displayed and an example of this text is illustrated at area 12 which shows a channels identity. In this embodiment, the text is displayed with a transparent background inasmuch that the video image 14 can still be viewed all around the text. Conventionally, when this form of display is generated, the text can appear to flicker to the viewer and this is regarded as being unsatisfactory. However, in accordance with the present invention, the flickering of the text can be reduced and this is achieved by altering the pixels of the video image 16 which are adjacent to the text, as indicated in Figures 2b and 2c. This alteration means that at each instant of display, the pixels which are adjacent to the text do not have exactly the colour which would be expected with reference to the video image which is being displayed. While the pixels may, to a greater or lesser degree, still include the required colour for the video image, they will also include a colour element which is related to the colour of the text which is being displayed at that time and these will change as the video image pixel colours change.

Thus, for example, pixel 16' which is required by the video image at that instant, as an example, to be green, represented by lines 18, includes a major element of red colour, indicated by lines 19, as the colour of the text which is being displayed is red 19. Pixel element 16", which is still adjacent to the text but is spaced therefrom, will also include an element of the colour red 19 indicated by line 19 but not to as great a degree as in the pixel 16' and therefore it will be appreciated that by the gradation of the alteration of the colour of the pixels, so the text can be provided to blend with the video image over which the same is being displayed and this reduces or eliminates the flicker effect.

It should also be appreciated that in a preferred embodiment the extent of the colour of the text which is included in the altered pixels will remain constant during the display of the text however, the actual colour of the pixel which is apparent to the viewer may change as the required video pixel image pixel colour changes.

Referring now to Figure 3, there is illustrated an alternative form of the invention wherein the text 12 is displayed over a semi-transparent background display layer 20 which is of a particular colour and in turn, the video image 22 is partially viewable through the background layer 20. In this format, the pixels which are adjacent to the text, will include an element of the text colour which is being displayed, as with the example of Figures 2a, b and c but will also be adjusted with regard to the level of transparency of the background layer 20.

Thus it should be appreciated that by following the present invention, there is provided a means whereby flickering text which is conventionally the case in the embodiments described, can be eliminated or at least reduced.

**Claims**

1. A display system comprising a display screen, and a receiving means connected with the said display screen for generating video images to be displayed on said screen, said receiving means also being provided with means to generate text which is selectively superimposed on said video image on the screen and **characterised in that** in the generation of said text, the pixels of the video image which are adjacent to said text on screen are altered for display to include at least an element of the colour in which the text is generated.

2. A display system according to claim 1 **characterised in that** the pixels of the video image which are adjusted are those directly adjacent to the displayed text.

3. A display system according to claim 2 **characterised in that** the pixels are adjusted such that the pixels are changed to or include a significant proportion of, the colour of the displayed text.

4. A display system according to claim **characterised in that** the pixels which are adjusted include those which are adjacent to but spaced from the displayed text and the same are adjusted to include an element of the colour of the text but not to such a great extent as those pixels which are directly adjacent to the text.

5. A display system according to claim 1 **characterised in that** the adjustments to the pixels surrounding and adjacent to the text is allows the text to visually blend with the video image over which the text is superimposed to prevent a visual flickering effect.

6. A display system according to claim 1 **characterised in that** the text is displayed on a "transparent" background which means that the video image over which the text is superimposed is viewable in a normal format with the exception of the specific area covered by the text itself.

7. A display system according to claim 1 **characterised in that** the text is displayed on a background layer of a uniform colour and said background of uniform colour can be extended over a specific area of the screen or over the entire screen with the video image over which the background is superimposed at least partially viewable through the background layer.

8. A display system according to claim 7 **characterised in that** the pixels which are adjusted include an element of the colour of the video image and text and also an additional element whereby the transparency of the pixels surrounding the text is adjusted with respect to the level of transparency of the background layer.

9. A display system according to claim 1 **characterised in that** the adjustment of the pixels adjacent the text displayed on the screen is an ongoing process with the pixels colour changing as the video image on the screen changes for the duration of the display of the text.

10. A display system according to claim 9 **characterised in that** while the colour of the pixels change during the display of the text, the percentage of the colour of the text allocated to each pixel remains constant during the display of the text, and the change in colour of the pixel is due to change in colour of the video image.

11. A method for generating a text display on a display screen, said text superimposed directly onto a moving video image or indirectly onto a semi transparent background, said method comprising the steps of specifying the colour of the text, performing an anti aliasing technique on the edge of the text and **characterised in that** for those pixels of the display adjacent the displayed text at least some of said pixels are adjusted **in that** a percentage of the colour of the text is combined with the required colour of the pixel derived from the video image and said adjusted pixels displayed.

**12.** A method according to claim 11 **characterised in that** those pixels directly adjacent to the displayed text include a larger proportion of the colour of the text.

**13.** A method according to claim 11 **characterised in that** when the text is displayed on a semi transparent background, the pixels are further adjusted by a factor representing the degree of transparency of the background layer.

**14.** A method according to claim 11 **characterised in that** the adjustments to the pixels change as the video image changes for those pixels such that the colour of the displayed pixels changes in accordance with changes to the video image colours.

**15.** A broadcast data receiver for the generation of video images on a display screen of a television set, said receiver also capable of generating text superimposed over the said video image and **characterised in that** when generating the text the pixels of the video image which are adjacent to said text on screen are altered for display to include at least an element of the colour in which the text is generated.

FIG. 1

FIG. 2A

FIG. 2B

FIG. 2C

FIG. 3